# EUROPÄISCHE PATENTSCHRIFT

(11) **EP 1 844 970 B1**
(45) Veröffentlichungstag und Bekanntmachung des Hinweises auf die Patenterteilung: **14.08.2013**
(21) Anmeldenummer: 07007500.7
(22) Anmeldetag: 12.04.2007
(51) Int. Cl.: B60L 3/00, B60L 3/12, H02J 13/00

(54) **Nahverkehrssystem mit Energiefernmessung**
Local transport system with remote energy measurement
Système de transport urbain doté d'une mesure de l'énergie distante

(30) Priorität: 12.04.2006 DE 102006017665; 14.06.2006 DE 102006027584
(43) Veröffentlichungstag der Anmeldung: 17.10.2007
(73) Patentinhaber: KNORR-BREMSE Systeme für Schienenfahrzeuge GmbH, 80809 München (DE)
(72) Erfinder: Stendardi, Lorenzo, 20154 Mailand (IT); Ardemagni, Pierenerico, 26900 Lodi (IT)
(74) Vertreter: Mattusch, Gundula

(56) Entgegenhaltungen:
- EP-A1- 1 918 153
- EP-A2- 0 743 528
- DE-C1- 19 702 132
- US-A1- 2003 230 994
- TREIGE P ET AL: "Energiemessung auf elektischen Triebfahrzeugen bei der Deutschen Bahn./On-board energy measurment at electric motor vehicles of Deutsche Bahn./", ELEKTRISCHE BAHNEN, OLDENBOURG INDUSTRIEVERLAG, MUNCHEN, DE, Bd. 98, Nr. 8, 1. August 2000 (2000-08-01) , Seiten 300-305, XP008083735, ISSN: 0013-5437

## Beschreibung

Die Erfindung geht aus von einem Nahverkehrssystem beinhaltend elektrisch betriebene Nahverkehrsfahrzeuge wie Stadtbahnen, Untergrundbahnen, Straßenbahnen, S-Bahnen oder Trolleybusse, gemäß dem Oberbegriff von Anspruch 1.

In Zeiten steigender Energiepreise und knappen finanziellen Mitteln der öffentlichen Hand (Städte, Kommunen) sind energiesparende Nahverkehrssysteme wünschenswert. Vor dem Hintergrund der Tatsache, dass bei der Erzeugung hochwertiger elektrischer (sekundärer) Energie ungefähr drei Viertel der in Öl, Kohle, Wasser oder Kernkraft vorhandenen Primärenergie verloren geht, ist vor allem bei elektrisch betriebenen Nahverkehrsfahrzeugen ein geringer Energieverbrauch anzustreben.

In EP 0 743 528 A2 ist eine Vorrichtung zum Messen der Netzspannung für Schienenfahrzeuge offenbart, mit einem Spannungssensor, der einen als Widerstand ausgebildeten Spannungsteiler aufweist. Der Zweck der Messung der Netzspannung besteht darin, dass der Motor von Lokomotiven, die mit Mehrfachspannung betrieben werden können, über eine Kontrolleinrichtung auf den Betrieb mit der jeweils gemessenen Spannung geschaltet wird. Ebenso wird gemäß DE 197 02 132 C1 eine Einspeiseschaltung für ein Bordnetz eines Mehrsystemfahrzeugs vorgeschlagen, welches für einen Betrieb an verschiedenartigen Metzspannungen ausgelegt ist.

Ein gattungsgemäßes Nahverkehrsystem ist aus Treige P. et al.:"Energiemessung auf elektrischen Triebfahrzeugen bei der Deutschen Bahn", ELEKTRISCHE BAHNEN, OLDENBURG INDUSTRIEVERLAG; MÜNCHEN; DE, Bd.98, Nr.8, 1.August 2000 (2000-08-01), Seiten 300-305, XP008083735, ISSN:0013-5437 bekannt.

Der vorliegenden Erfindung liegt die Aufgabe zugrunde, ein Nahverkehrssystem derart weiter zu entwickeln, dass das Messen des Energieverbrauchs auf möglichst einfache Weise erfolgen kann.

Diese Aufgabe wird erfindungsgemäß durch die Merkmale von Anspruch 1 gelöst.

### Vorteile der Erfindung

Die Erfindung beruht auf dem Gedanken, den Energieverbrauch wenigstens einiger, bevorzugt aller Nahverkehrsfahrzeuge einer Flotte von elektrisch betriebenen Nahverkehrsfahrzeugen einer Kommune zu messen, um anhand der gewonnenen Energieverbrauchsdaten den Energieverbrauch dadurch zu senken, dass beispielsweise das Fahrverhalten gezielt beeinflusst wird und/oder Fahrpläne im Hinblick auf einen möglichst geringen Energieverbrauch geändert werden. Eine weitere Möglichkeit besteht darin, anhand der gemessen Energiedaten von Hilfsaggregaten wie Klimaanlage, Kompressoren, Beleuchtungsanlage etc. deren Dimensionierung und Einsatzbedingungen energiesparend festzulegen. Hierzu liefert die online Energiedatenerfassung und -übertragung an eine zentrale Station zur Auswertung gemäß der Erfindung die Grundlage.

Die an Bord eines Nahverkehrsfahrzeugs befindliche Messeinrichtung misst die verbrauchte elektrische Energie und speichert die entsprechenden Energiedaten, welche an eine zentrale Station zur Auswertung drahtlos gesendet werden. Die drahtlose Übertragung vereinfacht die Ablesung und die Sammlung der gemessenen Energiedaten von allen Fahrzeugen. Eine direkte Ablesung am Fahrzeug würde einen wesentlich höheren Personalaufwand bedeuten. Diese Maßnahmen ermöglichen eine flexible Ablesung der Energieverbrauchsdaten, d.h. eine freie Fahrtgestaltung der Flotte, ohne dass ein Fahrzeug zum Ablesen und Auswerten der Energieverbrauchsdaten außer Betrieb gesetzt werden müsste. Die Installation der Messeinrichtung und der Einrichtung zur drahtlosen Kommunikation am betreffenden Nahverkehrsfahrzeug ist einfach, beispielsweise am Dach oder Unterflur und braucht keine Verbindung mit anderen Fahrzeugstromkreisen. Nicht zuletzt handelt es sich um ein standardisierbares System, welches im wesentlichen unverändert für jegliche Art von elektrisch betriebenen Nahverkehrsfahrzeugen einsetzbar ist, wie beispielsweise für Stadtbahnen, Untergrundbahnen, Straßenbahnen, S-Bahnen oder Trolley-Busse.

Die dem Nahverkehrsfahrzeug zugeordnete Einrichtung zur drahtlosen Kommunikation umfasst eine Sende- und Empfangseinrichtung zum Senden der gespeicherten Energieverbrauchsdaten an die zentrale Station und zum Empfang von Steuersignalen von dieser.

Die zentrale Station umfasst ihrerseits eine Sende- und Empfangseinrichtung zum Empfang der von der Sende- und Empfangseinrichtung des Nahverkehrsfahrzeugs gesendeten Energieverbrauchsdaten und zum Senden der Steuersignale.

Dann können auf ein von der Sende- und Empfangseinrichtung der zentralen Station an die Sende- und Empfangseinrichtung des Nahverkehrsfahrzeugs gesendetes Anforderungssignal hin die diesem zugeordneten und gespeicherten Energieverbrauchsdaten an die zentrale Station drahtlos übertragen werden.

Dabei ist die zentrale Station einem zum Abstellen von Nahverkehrsfahrzeugen vorgesehenen Fahrzeugdepot zugeordnet und insbesondere über einem Einfahrtstor angeordnet, so dass sie das Anforderungssignal bei Einfahrt eines Nahverkehrsfahrzeugs in das Fahrzeugdepot sendet. Wenn ein Fahrzeug unter der zentralen Station durchfährt, erhält diese auf das Anforderungssignal hin fahrzeugspezifische Daten wie beispielsweise die Fahrzeugnummer. Nach der Fahrzeugerkennung werden dann die Energieverbrauchsdaten über der Zeit (Energiekurve) und unter Umständen auch der auf die Einsatzzeit bezogene Gesamtverbrauchswert drahtlos vom Fahrzeug auf die zentrale Station übertragen. Die zentrale Station ist dabei vorzugsweise derart ausgebildet, dass sie nach dem Empfang der fahrzeugbezogenen Energieverbrauchsdaten ein Rückstellsignal zum Rückstellen des Energieverbrauchsdatenspeichers auf Null sendet.

Durch die in den Unteransprüchen aufgeführten Maßnahmen sind vorteilhafte Weiterbildungen und Verbesserungen der in den unabhängigen Ansprüchen angegebenen Erfindung möglich.

Um den Einfluss des Antriebs und der Hilfsaggregate wie Klimaanlage, Kompressoren, Beleuchtungsanlage etc. auf den Energieverbrauch feststellen zu können, ist eine dem Nahverkehrsfahrzeug zugeordnete Messeinrichtung besonders bevorzugt zur Messung der elektrischen Antriebsenergie und zur Messung der von elektrischen Hilfsaggregaten verbrauchten elektrischen Energie ausgebildet. Zur Realisierung sind wenigstens ein Messwiderstand zur Messung des elektrischen Antriebsstroms und wenigstens ein Messwiderstand zur Messung des von den elektrischen Hilfsaggregaten aufgenommenen elektrischen Stroms vorgesehen. Diese Messwiderstände haben bevorzugt einen kleinen elektrischen Widerstand, bei welchem nur eine geringe Messspannung abfällt, um den sie durchfließenden Strom gemäß dem Ohm'schen Gesetz zu bestimmen.

Die dem Nahverkehrsfahrzeug zugeordnete Messeinrichtung weist vorzugsweise weiterhin einen Spannungsteiler auf, welcher ein von einem Stromabnehmer abgenommenes Hochspannungssignal in ein Niedrigspannungssignal wandelt. Dann ist beispielsweise ein von der Messeinrichtung umfasster Mikrocomputer vorgesehen, welcher aus den gemessenen Strömen und dem gemessenen Niedrigspannungssignal die verbrauchte elektrische Energie berechnet und als Energieverbrauchsdaten speichert.

Der Mikrocomputer kann derart ausgebildet sein, dass er die von dem Nahverkehrsfahrzeug verbrauchte elektrische Energie zeit- und/oder fahrstreckenabhängig speichert. Genauer können definierte zeitliche und/oder fahrstreckenbezogene Grenzen festgelegt werden, innerhalb welcher die Energieverbrauchsdaten des Nahverkehrsfahrzeugs in einem Energieverbrauchsdatenspeicher speicherbar sind. Dann kann eine Speicherung der Energieverbrauchsdaten beispielsweise auf besonders energieverbrauchskritische Zeiten oder Streckenabschnitte beschränkt werden.

Die zum Betrieb der bordfesten Messeinrichtung und der bordfesten Einrichtung zur drahtlosen Kommunikation notwendige elektrische Energie wird bevorzugt vom Stromabnehmer geliefert, so dass in vorteilhafter Weise keine zusätzliche Energieversorgung notwendig ist.

Genaueres geht aus der folgenden Beschreibung eines Ausführungsbeispiels hervor.

### Zeichnung

Nachstehend ist ein Ausführungsbeispiel der Erfindung in der Zeichnung dargestellt und in der nachfolgenden Beschreibung näher erläutert. In der Zeichnung zeigt
- Fig.1: eine schematische Darstellung des Aufbaus einer bordfesten Messeinrichtung und einer bordfesten Einrichtung zur drahtlosen Kommunikation gemäß einer bevorzugten Ausführungsform der Erfindung;
- Fig.2: eine schematische Darstellung des funktionalen Aufbaus der zentralen Station.

### Beschreibung des Ausführungsbeispiels

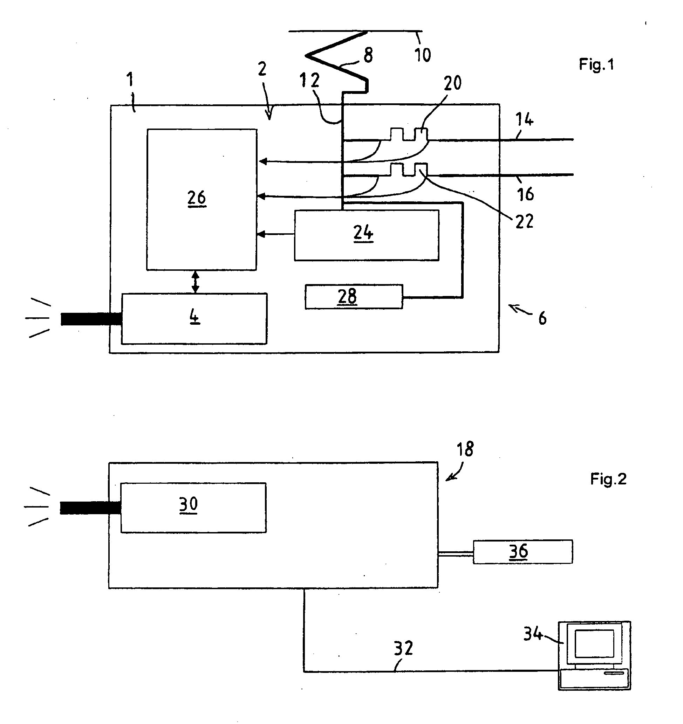

In Fig.1 ist mit der Bezugszahl 1 eine bordfeste Einheit bestehend aus einer Messeinrichtung 2 und einer Einrichtung 4 zur drahtlosen Kommunikation dargestellt, wie sie beispielsweise auf einem Dach eines elektrisch betriebenen Nahverkehrsfahrzeugs oder Leichtfahrzeugs, beispielsweise einer Straßenbahn 6 angeordnet ist. Die Straßenbahn 6 ist eine von mehreren Straßenbahnen, wie sie von einem Nahverkehrssystem einer Kommune umfasst sind. Die Straßenbahnen bestimmter Linien des Nahverkehrssystems sind, wenn sie sich außer Betrieb befinden, insbesondere nachts in einem Straßenbahndepots untergebracht. In der Praxis sind in größeren Städten mehrere solcher Straßenbahndepots vorhanden.

Beispielsweise besitzt die Stadt Mailand 20 Straßenbahnlinien, mit einer gesamten Streckenlänge von 284 km. Insgesamt fahren auf dem Netz ca. 500 Straßenbahnen unter einer Fahrdrahtspannung von 600V DC. Die Stadt verfügt über 18 Straßenbahndepots und 4 Werkstätten zur Überholung und Reparatur.

Der in Fig.1 schematisch gezeigte Pantograph oder Stromabnehmer 8 dient zur Aufnahme und Übertragung von elektrischer Energie von einer Fahrleitung 10 zu einer im Inneren eines Kastens eines Triebfahrzeugs der Straßenbahn 6 angeordneten elektrischen Antriebsmaschine, zu welcher eine von einer Stromabnehmerleitung 12 abzweigende Hochspannungsleitung 14 führt, um diese mit Antriebsstrom zu versorgen. Bei dem Triebfahrzeug handelt es sich bevorzugt um ein mit Gleichstrom betriebenes Treibfahrzeug, welchem über die hier als Oberleitung 10 ausgebildete Fahrleitung eine Spannung von 600 V DC zugeführt wird. Der Stromabnehmer 8 ist am Kasten des Triebfahrzeugs, bevorzugt auf dessen Dach befestigt.

Im weiteren zweigt von der Stromabnehmerleitung 12 eine weitere Hochspannungsleitung 16 ab, welche Hilfsaggregate wie Klimaanlage, Kompressoren und die Innen- und Außenbeleuchtungsanlage der Straßenbahn 6 mit einem Hilfsbetriebestrom versorgt.

Die in die an Bord der Straßenbahn 6 befindliche Einheit 1 integrierte Messeinrichtung 2 misst die von der elektrischen Antriebsmaschine und den Hilfsaggregaten verbrauchte elektrische Energie und speichert die entsprechenden Energiedaten, welche an eine zentrale Station 18 zur Auswertung drahtlos gesendet werden.

Um den Einfluss des Antriebs und der Hilfsaggregate wie Klimaanlage, Kompressoren, Beleuchtungsanlage etc. auf den Energieverbrauch feststellen zu können, ist die der Straßenbahn 6 zugeordnete Messeinrichtung 2 besonders bevorzugt zur Messung der elektrischen Antriebsenergie und zur Messung der von elektrischen Hilfsaggregaten verbrauchten elektrischen Energie ausgebildet. Alternativ ist selbstverständlich auch eine Messung lediglich einer der genannten elektrischen Energien möglich.

Zur Realisierung ist ein Messwiderstand (Shunt) 20 zur Messung des in der einen Hochspannungsleitung 14 fließenden elektrischen Stroms und ein weiterer Messwiderstand 22 zur Messung des von den elektrischen Hilfsaggregaten aufgenommenen und in der weiteren Hochspannungsleitung 16 fließenden elektrischen Stroms vorgesehen. Diese Messwiderstände 20, 22 haben bevorzugt einen kleinen elektrischen Widerstand, bei welchem nur eine geringe Messspannung abfällt, um den sie durchfließenden Strom gemäß dem Ohm'schen Gesetz zu bestimmen.

Die der Straßenbahn 6 zugeordnete Messeinrichtung 2 weist weiterhin einen Spannungsteiler 24 auf, welcher das von dem Stromabnehmer 8 abgenommene Hochspannungssignal 600 V DC in ein Niedrigspannungssignal wandelt. Dieses Niedrigspannungssignal wird in einen von der Messeinrichtung 2 umfassten Mikrocomputer oder Mikroprozessor 26 eingespeist, welcher aus den gemessenen Strömen, d.h. aus dem Antriebsstrom und dem Hilfsbetriebestrom und dem gemessenen Niedrigspannungssignal die jeweils vom Antrieb und den Hilfsaggregaten verbrauchte elektrische Energie vorzugsweise getrennt berechnet und als Energieverbrauchsdaten speichert.

Der Mikrocomputer 26 ist ausgebildet, um die jeweils verbrauchte elektrische Energie zeit- und/oder fahrstreckenabhängig zu speichern. Genauer können beispielsweise über eine Eingabeeinheit definierte zeitliche und/oder fahrstreckenbezogene Grenzen festgelegt werden, innerhalb welcher die der Straßenbahn zugeordneten Energieverbrauchsdaten in einem Energieverbrauchsdatenspeicher des Mikrocomputer 26 speicherbar sind.

Weiterhin ist in der Einheit 1 die Einrichtung zur drahtlosen Kommunikation integriert, umfassend eine Sende- und Empfangseinrichtung 4 zum Senden der gespeicherten Energieverbrauchsdaten an die zentrale Station 18 und zum Empfang von Steuersignalen von dieser.

Nicht zuletzt umfasst die Einheit 1 eine eigene Stromversorgung 28. Die zum Betrieb der Einheit 1 notwendige elektrische Energie wird bevorzugt vom Stromabnehmer 8 geliefert.

Die Einheit 1 auf dem Dach der Straßenbahn 6 misst daher den verbrauchten Antriebsstrom und den verbrauchten Hilfsbetriebestrom, welche jeweils an den Widerständen (Shunts) abgegriffen werden. Der Mikrocomputer 26 wandelt die analogen Stromsignale in Digitalform und misst zugleich das Niederspannungssignal, welches er aus dem Spannungsteiler 24 erhält. Die Fahrdrahtspannung kann für dieses Beispiel zwischen 400 und 1000 V DC schwanken. Der verbrauchte Strom beträgt beispielsweise zwischen 0 und 2000 A.

Der Mikrocomputer 26 multipliziert kontinuierlich die gemessenen Strom- und Spannungssignale und integriert den damit erhaltenen Leistungswert über der Zeit. Dadurch ergibt sich die Energiemessung, die dann in dem Energieverbrauchsdatenspeicher des Mikrocomputer 26 abgespeichert wird. Die Abspeicherung ist zeitlich beliebig konfigurierbar. Beispielsweise wird die Summe der abgespeicherten Energiewerte berechnet und kontinuierlich bis zum Erreichen eines maximalen Werts von beispielsweise 999 Gigawattstunden aktualisiert. Danach wird der Gesamtwert wieder auf Null zurückgestellt.

Die in Fig.2 gezeigte zentrale Station 18 umfasst ihrerseits eine Sende- und Empfangseinrichtung 30 zum Empfang der von der Sende- und Empfangseinrichtung 4 der Straßenbahn 6 gesendeten Energieverbrauchsdaten und zum Senden der Steuersignale. Die Sende- und Empfangseinrichtung 30 der zentralen Station 18 ist über eine Datenleitung 32 mit einer Auswerteeinheit, bevorzugt einem Personalcomputer 34 verbunden. Eine Spannungsversorgung 36 mit Niedrigspannung stellt die Lieferung elektrischer Energie an die Sende- und Empfangseinrichtung 30 der zentralen Station 18 sicher.

Auf ein von der Sende- und Empfangseinrichtung 30 der zentralen Station 18 an die Sende- und Empfangseinrichtung 4 der Straßenbahn 6 gesendetes Anforderungssignal hin werden dann die diesem zugeordneten und gespeicherten Energieverbrauchsdaten an die zentrale Station 18 drahtlos übertragen.

Die Funktionen der der Straßenbahn 6 zugeordneten Einheit 1 beinhalten dann bevorzugt:
a) Die Berechnung der verbrauchten Energie als Profil über Zeit und als Gesamtwert,
b) Die Beantwortung des Anforderungssignals der zentralen Station,
c) Die Übertragung der gespeicherten Werte an die zentrale Station,
d) Den Reset der gespeicherten Werte auf ein Resetsignal der zentralen Station hin.
   Dabei kann die zentrale Station 18 einem zum Abstellen von Straßenbahnen vorgesehenen Straßenbahndepot zugeordnet sein und ist insbesondere über einem Einfahrtstor angeordnet, so dass sie das Anforderungssignal bei Einfahrt einer Straßenbahn 6 in das Straßenbahndepot sendet. Wenn eine Straßenbahn unter der zentralen Station durchfährt, erhält diese auf das Anforderungssignal hin fahrzeugspezifische Daten wie beispielsweise die Fahrzeugnummer. Nach der Fahrzeugerkennung werden dann die Energieverbrauchsdaten über der Zeit (Energiekurve) und unter Umständen auch der auf die Einsatzzeit bezogene Gesamtverbrauchswert drahtlos von der betreffenden Straßenbahn auf die zentrale Station 18 übertragen. Die zentrale Station 18 ist dabei derart ausgebildet, dass ihre Sende- und Empfangseinrichtung 30 nach dem Empfang der fahrzeugbezogenen Energieverbrauchsdaten ein Rückstellsignal zum Rückstellen des Energieverbrauchsdatenspeichers im Mikrocomputer 26 der Straßenbahn 6 auf Null sendet.
e) Alternativ könnte die zentrale Station 18 auch als mobile, beispielsweise tragbare Einheit ausgebildet sein, welche beispielsweise innerhalb einer vorgegebenen Sendereichweite, beispielsweise 10 Meter an die Straßenbahn 6 herangeführt wird, um die Energieverbrauchsdaten empfangen zu können. In diesem Fall könnten die Energieverbrauchsdaten der Straßenbahnen über eine Schnittstelle aus der mobilen Einheit 18 ausgelesen und in einem immobilen Zentralrechner gesammelt und ausgewertet werden.

Nach der Fahrzeugserkennung, werden also die Energiekurve und der Gesamtenergiewert an die zentrale Station 18 übertragen und die in der der Straßenbahn 6 zugeordneten Einheit 1 gespeicherten Werte wieder auf Null gestellt. Die Kommunikation funktioniert innerhalb eines Zeitraums von weniger als eine Sekunde, bei einer Fahrzeugsgeschwindigkeit von beispielsweise weniger als 20 km/h. Die abgelesenen Werte werden durch Serialkommunikation von der zentralen Station 18 an den Personalcomputer 34 zur Auswertung übertragen.

Die auf diese Weise im Personalcomputer 34 gesammelten Messungen der in das jeweilige Straßenbahndepot eingefahrenen Straßenbahnen werden beispielsweise nachts an einen Zentralrechner beispielsweise per e-mail weitergeleitet. Dasselbe Verfahren wird auch für alle weiteren Straßenbahndepots angewendet, so dass am Zentralrechner dann die Energieverbrauchsdaten aller in die verschiedenen Straßenbahndepots eingefahrenen Straßenbahnen zur weiteren Analyse zur Verfügung stehen. Die Auswertung der Energieverbrauchsdaten kann dann linienweise, depotweise und fahrzeugweise erfolgen.

### Bezugszeichenliste

- 1: Einheit
- 2: Messeinrichtung
- 4: Sende- und Empfangseinrichtung
- 6: Straßenbahn
- 8: Stromabnehmer
- 10: Fahrleitung
- 12: Stromabnehmerleitung
- 14: Hochspannungsleitung
- 16: Hochspannungsleitung
- 18: zentrale Station
- 20: Messwiderstand
- 22: Messwiderstand
- 24: Spannungsteiler
- 26: Mikrocomputer
- 28: Stromversorgung
- 30: Sende- und Empfangseinrichtung
- 32: Datenleitung
- 34: Personalcomputer
- 36: Spannungsversorgung

## Patentansprüche

1. Nahverkehrssystem beinhaltend elektrisch betriebene Nahverkehrsfahrzeuge wie Stadtbahnen, Untergrundbahnen, Straßenbahnen, S-Bahnen oder Trolleybusse, wobei wenigstens einige der Nahverkehrsfahrzeuge (6) eine bordfeste Messeinrichtung (2) zur online-Messung der von dem betreffenden Nahverkehrsfahrzeug (6) verbrauchten elektrischen Energie und zur Speicherung entsprechender Energieverbrauchsdaten sowie eine bordfeste Einrichtung (4) zur drahtlosen Kommunikation mit einer zentralen Station (18) zur Übertragung und Auswertung der Energieverbrauchsdaten des betreffenden Nahverkehrsfahrzeugs (6) aufweisen, wobei
a) die dem Nahverkehrsfahrzeug (6) zugeordnete Einrichtung zur drahtlosen Kommunikation eine Sende- und Empfangseinrichtung (4) zum Senden der gespeicherten Energieverbrauchsdaten an die zentrale Station (18) und zum Empfang von Steuersignalen von dieser umfasst, und
b) die zentrale Station (18) eine Sende- und Empfangseinrichtung (30) zum Empfang der von der Sende- und Empfangseinrichtung (4) des Nahverkehrsfahrzeugs (6) gesendeten Energieverbrauchsdaten und zum Senden der Steuersignale umfasst, wobei
c) auf ein von einer Sende- und Empfangseinrichtung (30) der zentralen Station (18) an die Sende- und Empfangseinrichtung (4) des Nahverkehrsfahrzeugs (6) gesendetes Anforderungssignal hin die diesem zugeordneten und gespeicherten Energieverbrauchsdaten an die Sende- und Empfangseinrichtung (30) der zentralen Station (18) drahtlos übertragen werden, **dadurch gekennzeichnet, dass**
d) die zentrale Station (18) einem zum Abstellen von Nahverkehrsfahrzeugen vorgesehenen Fahrzeugdepot zugeordnet und derart ausgebildet ist, dass sie das Anforderungssignal bei Einfahrt des Nahverkehrsfahrzeugs (6) in das Fahrzeugdepot sendet.

2. Nahverkehrssystem nach Anspruch 1, **dadurch gekennzeichnet, dass** die dem Nahverkehrsfahrzeug (6) zugeordnete Messeinrichtung (2) zur Messung von elektrischer Antriebsenergie und zur Messung der von elektrischen Hilfsaggregaten des Nahverkehrsfahrzeugs (6) verbrauchter elektrischer Energie ausgebildet ist.

3. Nahverkehrssystem nach wenigstens einem der vorhergehenden Ansprüche, **dadurch gekennzeichnet, dass** die dem Nahverkehrsfahrzeug (6) zugeordnete Messeinrichtung (2) wenigstens einen Messwiderstand (20, 22) zur Strommessung beinhaltet.

4. Nahverkehrssystem nach Anspruch 2 und 3, **dadurch gekennzeichnet, dass** wenigstens ein Messwiderstand (20) zur Messung des elektrischen Antriebsstroms und wenigstens ein Messwiderstand (22) zur Messung des von den elektrischen Hilfsaggregaten aufgenommenen elektrischen Stroms vorgesehen ist.

5. Nahverkehrssystem nach wenigstens einem der vorhergehenden Ansprüche, **dadurch gekennzeichnet, dass** die dem Nahverkehrsfahrzeug (6) zugeordnete Messeinrichtung (2) einen Spannungsteiler (24) aufweist, welcher ein von einem Stromabnehmer (8) abgenommenes Hochspannungssignal in ein Niedrigspannungssignal wandelt.

6. Nahverkehrssystem nach den Ansprüchen 1 bis 5, **dadurch gekennzeichnet, dass** wenigstens ein Mikrocomputer (26) vorgesehen ist, welcher aus dem gemessen Strom und dem gemessenen Niedrigspannungssignal die verbrauchte elektrische Energie berechnet und als Energieverbrauchsdaten speichert.

7. Nahverkehrssystem nach Anspruch 6, **dadurch gekennzeichnet, dass** der Mikrocomputer (26) derart ausgebildet ist, dass er die von dem Nahverkehrsfahrzeug (6) verbrauchte elektrische Energie zeit- und/oder fahrstreckenabhängig in einem Energieverbrauchsdatenspeicher (26) speichert.

8. Nahverkehrssystem nach Anspruch 7, **dadurch gekennzeichnet, dass** der Mikrocomputer (26) derart ausgebildet ist, dass definierte zeitliche und/oder fahrstreckenbezogene Grenzen festlegbar sind, innerhalb welcher die dem Nahverkehrsfahrzeug (6) zugeordneten Energieverbrauchsdaten speicherbar sind.

9. Nahverkehrssystem nach den Ansprüchen 7 und 8, **dadurch gekennzeichnet, dass** die zentrale Station (18) derart ausgebildet ist, dass sie nach dem Empfang der von der Sende- und Empfangseinrichtung (4) des Nahverkehrsfahrzeugs (6) gesendeten Energieverbrauchsdaten ein Rückstellsignal zum Rückstellen des Energieverbrauchsdatenspeichers (26) sendet.

10. Nahverkehrssystem nach wenigstens einem der vorhergehenden Ansprüche, **dadurch gekennzeichnet, dass** die zum Betrieb der Messeinrichtung (2) und der Einrichtung zur drahtlosen Kommunikation (4) notwendige elektrische Energie vom Stromabnehmer (8) geliefert wird.

## Claims

1. Short-distance transportation system (including electrically operated short-distance transportation vehicles such as interurban railways, underground railways, tramways, commuter trains or trolley busses, wherein at least some of the short-distance transportation vehicles (6) are provided with an on-board fixed measuring means (2) for on-line measurement of the electrical energy consumed by the respective short-distance transportation vehicle (6) and for storing respective energy consumption data, as well as an on-board fixed means (4) for wireless communication with a central station (18) for the transmission and evaluation of the energy consumption data of the respective short-distance transportation vehicle (6), wherein
(a) said means associated with said short-distance transportation vehicle (6) for wireless communication comprises a transmitter and receiver means (4) for transmitting the stored energy consumption data to said central station (18) and for receiving control signals from the latter, and
(b) said central station (18) comprises a transmitting and receiving means (4) for receiving the energy consumption data transmitted from said transmitter and receiver means (4) of said short-distance transportation vehicle (8) and for transmitting said control signals, wherein
(c) in response to a demand signal transmitted from a transmitter and receiver means (30) of said central station (18) to said transmitter and receiver means (4) of said short-distance transportation vehicle, energy consumption data stored and associated with said demand signal is transmitted without wire to said transmitter and receiver means (30) of said central station (18), **characterised in that**
(d) said central station is associated with a vehicle depot provided for parking short-distance transportation vehicles and is so configured that it transmits said demand signal when said short-distance transportation vehicle (6) enters said vehicle depot.

2. Short-distance transportation system according to Claim 1, **characterised in that** said measuring means (2) associated with said short-distance transportation vehicle (6) is configured for measuring electrical driving energy and for measuring the electrical energy consumed by electrical auxiliary modules of said short-distance transportation vehicle (6).

3. Short-distance transportation system according to at least one of the preceding Claims, **characterised in that** said measuring means (2) associated with said short-distance transportation vehicle (6) includes at least one measuring resistor (20, 22) for current measurement.

4. Short-distance transportation system according to Claims 2 and 3, **characterised in that** at least one measuring resistor (20) is provided for measuring the electrical driving current and at least one measuring resistor (22) is provided for measuring the electrical current consumed by said electrical auxiliary modules.

5. Short-distance transportation system according to at least one of the preceding Claims **characterised in that** said measuring means (2) associated with said short-distance transportation vehicle (6) comprises a voltage divider (24) that converts a high-voltage signal tapped by a current collector (8) into a low-voltage signal.

6. Short-distance transportation system according to the Claims 1 to 5, **characterised in that** at least one micro computer (26) is provided that computes the consumed electrical energy by deriving it from the measured current and the measured low-voltage signal consumed and stores the result as energy consumption data.

7. Short-distance transportation system according to Claim 6, **characterised in that** said micro computer (26) is so designed that it stores the electrical energy consumed by the short-distance transportation vehicle (6) as a function of time and/or distance covered in an energy consumption data memory (26).

8. Short-distance transportation system according to Claim 7, **characterised in that** said micro computer (26) is so designed that defined limits in terms of time and/or distances covered can be determined, within which the energy consumption data associated with said short-distance transportation vehicle, can be stored.

9. Short-distance transportation system according to the Claims 7 and 8, **characterised in that** said central station (18) is so designed that it emits a resetting signal for resetting said energy consumption data memory (26) after reception of the energy consumption data transmitted from said transmitter and receiver means (4) of said short-distance transportation vehicle (6).

10. Short-distance transportation system according to at least one of the preceding Claims 8, **characterised in that** the electrical energy required for the operation of said measuring means (2) and said means for wireless communication (4) is supplied by said current collector (8).

## Revendications

1. Système de transport urbain (renfermant des véhicules de transport urbain à commande électrique comme des trams-trains, des métros, des tramways, des chemins de fer interurbains ou des trolleybus, dans lequel au moins quelques-uns des véhicules de transport urbain (6) sont munis d'un moyen de mesure fixe de bord (2) pour la mesure en ligne de l'énergie électrique consommé par le véhicule de transport urbain respectif (6) et à mémoriser des données de consommation de l'énergie respective, ainsi que d un moyen fixe de bord (4) pour la communication sans fil avec un poste central (18) pour la transmission et l'évaluation des données de consommation de l'énergie du véhicule de transport urbain respectif (6), dans lequel
(a) ledit moyen affecté audit véhicule de transport urbain (6) pour la communication sans fil comprend un moyen émetteur et récepteur (4) pour la transmission des données de consommation de l'énergie mises en mémoire vers ledit poste central (18) et pour la réception des signaux de commande à partir du dernier, et
(b) ledit poste central (18) comprend un moyen émetteur et récepteur (4) pour la réception des données de consommation de l'énergie transmises à partir dudit moyen émetteur et récepteur (4) dudit véhicule de transport urbain (8) et pour la transmission des signaux de commande, dans lequel
c) en réponse à un signal de demande transmis à partir d'un moyen émetteur et récepteur (30) dudit poste central (18) vers ledit moyen émetteur et récepteur (4) dudit véhicule de transport urbain, des données de consommation de l'énergie, qui sont mises en mémoire et affectées audit signal de demande, sont transmises sans fil vers ledit moyen émetteur et récepteur (30) dudit poste central (18), **caractérisé en ce que**
(d) ledit poste central est affecté à un dépôt de véhicules destine pour le stationnement des véhicules de transport urbain, en étant conçu d'une telle manière, qu'il émette ledit signal de demande quand ledit véhicule de transport urbain (6) entre ledit dépôt de véhicules.

2. Système de transport urbain selon la revendication 1, **caractérisé en ce que** ledit moyen de mesure (2) affecté audit véhicule de transport urbain (6) est conçu pour la mesure de l'énergie d'entraînement électrique, qui est consommé par des modules électriques secondaires dudit véhicule de transport urbain (6).

3. Système de transport urbain selon au moins une quelconque des revendications précédentes, **caractérisé en ce que** ledit moyen de mesure (2) affecté audit véhicule de transport urbain (6) renferme au moins une résistance de mesure (20, 22) pour la mesure du courant.

4. Système de transport urbain selon les revendications 2 and 3, **caractérisé en ce qu'**au moins une résistance de mesure (20) est montée pour la mesure du courant électrique d'entraînement et au moins une résistance de mesure (22) est montée pour la mesure du courant électrique consommé par lesdits modules électriques secondaires.

5. Système de transport urbain selon au moins une quelconque des revendications précédentes **caractérisé en ce que** ledit moyen de mesure (2) affecté audit véhicule de transport urbain (6) comprend un diviseur de tension (24), qui convertit un signal à haute tension, qui est prélevé par un collecteur du courant (8), en un signal à moyenne tension.

6. Système de transport urbain selon les revendications 1 à 5, **caractérisé en ce qu'**au moins un micro ordinateur (26) est dispose, qui calcule l'énergie électrique consommé en la dérivant du courant mesuré et le signal à moyenne tension mesurée, et met le résultat en mémoire en tant que données de consommation de l'énergie.

7. Système de transport urbain selon la revendication 6, **caractérisé en ce que** ledit micro ordinateur (26) est conçu d'une telle manière, qu'il mémorise l'énergie électrique consommé par le véhicule de transport urbain (6) en fonction du temps et/ou de la distance parcourue dans un mémoire de données de consommation de l'énergie (26).

8. Système de transport urbain selon la revendication 7, **caractérisé en ce que** ledit micro ordinateur (26) est conçu d'une telle manière, qu'on puisse établir des limites définis limites en temps et/ou distances parcourues, au-dedans desquels on peut mettre les données de consommation de l'énergie affectées audit véhicule de transport urbain en mémoire.

9. Système de transport urbain selon les revendications 7 et 8, **caractérisé en ce que** ledit poste central (18) est conçu d'une telle façon, qu'il émet un signal de remise afin de remettre ledit mémoire desdites données de consommation de l'énergie (26) après la réception des données de consommation de l'énergie transmises à partir dudit moyen émetteur et récepteur (4) dudit véhicule de transport urbain (6).

10. Système de transport urbain selon au moins une quelconque des revendications précédentes 8, **caractérisé en ce que** l'énergie électrique requise pour le fonctionnement dudit moyen de mesure (2) et dudit moyen de communication sans fil (4) est alimentée par ledit collecteur du courant (8).
